# EUROPEAN PATENT SPECIFICATION

(11) **EP 2 405 570 B1**
(45) Date of publication and mention of the grant of the patent: **21.03.2018**
(21) Application number: 10450114.3
(22) Date of filing: 07.07.2010
(51) Int. Cl.: H02P 6/18

(54) **A method and system for tracking inherent saliencies of ac machines**
Verfahren und System zur Verfolgung der innewohnenden Salienzen von Wechselstrommaschinen
Procédé et système pour suivre les saillances inhérentes des machines à courant alternatif

(43) Date of publication of application: 11.01.2012
(73) Proprietor: Technische Universität Wien, 1040 Wien (AT)
(72) Inventor: Wolbank, Thomas, 1050 Wien (AT)
(74) Representative: Beetz, Rainer

(56) References cited:
- WO-A1-03/087855
- BARTOLO J B ET AL: "Flux position estimation using current derivatives for the sensorless control of AC machines", COMMUNICATIONS, CONTROL AND SIGNAL PROCESSING, 2008. ISCCSP 2008. 3RD INTERNATIONAL SYMPOSIUM ON, IEEE, PISCATAWAY, NJ, USA, 12 March 2008 (2008-03-12), pages 1468-1473, XP031269303, ISBN: 978-1-4244-1687-5
- KUSCH R ET AL: "Encoderless position estimation of a squirrel cage synchronous reluctance machine", IECON-2003. PROCEEDINGS OF THE 29TH. ANNUAL CONFERENCE OF THE IEEE INDUSTRIAL ELECTRONICS SOCIETY. ROANOKE, VA, NOV. 2 - 6, 2003; [ANNUAL CONFERENCE OF THE IEEE INDUSTRIAL ELECTRONICS SOCIETY], NEW YORK, NY : IEEE, US, vol. 2, 2 November 2003 (2003-11-02), pages 1038-1043, XP010691197, DOI: DOI:10.1109/IECON.2003.1280188 ISBN: 978-0-7803-7906-0
- VOGELSBERGER M A ET AL: "Using PWM-Induced Transient Excitation and Advanced Signal Processing for Zero-Speed Sensorless Control of AC Machines", IEEE TRANSACTIONS ON INDUSTRIAL ELECTRONICS, IEEE SERVICE CENTER, PISCATAWAY, NJ, USA, vol. 57, no. 1, 1 January 2010 (2010-01-01), pages 365-374, XP011282593, ISSN: 0278-0046, DOI: DOI:10.1109/TIE.2009.2029578

## Description

The present invention refers to a method for tracking inherent saliencies of ac machines comprising a stator with windings and a rotor, wherein transient current time derivative changes or transient current changes due to voltage pulses applied to the stator windings are sensed, and the sensed signals are evaluated to track the saliencies; as well as to a system for tracking inherent saliencies of ac machines comprising a stator with windings and a rotor, said system comprising at least one sensor arranged to sense transient current time derivative changes or transient current changes due to voltage pulses applied to the stator windings, and evaluation means arranged to evaluate the sensed signals, to track the saliencies; according to the preambles of the independent claims.

Usually, modern electrical machines are designed and manufactured symmetrical; nevertheless, there are always some inherent saliencies present. These saliencies are usually not visible in the fundamental wave behavior of the machine; however, when looking at the high frequency or transient inductance there is a modulation detectable that can be exploited for speed sensorless control. Examples for main saliencies are the stator/rotor slotting saliency, the rotor (material, shape etc.) anisotropy saliency, and/or the main flux saturation saliency.

These saliencies influence the phase values of the high frequency or transient stator inductances. Their modulations thus correspond to the movement of the rotor or flux position. The mentioned saliencies are inherent, sometimes specifically constructed, and their magnitudes are very small when compared to the fundamental wave (usually clear below 10% considering induction machines).

To identify the phase values of the hf stator inductance, according to the prior art, two principles of measurement sequences have been suggested.

According to a first measurement setup, a continuous "injection" of a high frequency carrier signal (usually voltage) superposed to the fundamental wave is applied; then the machine response at this specific frequency is measured and evaluated; cf. for instance Degner et al., "Position Estimation in Induction Machines Utilizing Rotor Bar Slot Harmonics and Carrier Frequency Signal Injection", IEEE Trans. on Ind. Appl., Vol. 36 (3) (2000), pp. 736-742; or Teske et al., "Analysis and Suppression of High Frequency Inverter Modulation on Sensorless Position Controlled Induction Machine Drives", IEEE Trans. on Ind. Appl., Vol. 39 (1) (2003), pp. 10-18. Special care has to be taken for the inverter interlock dead time that influences the injected hf component at every sector crossing. This way of injecting a test signal has to be continuously done, and thus an integration into the fundamental wave excitation is not possible.

The second possible measurement principle is to use an excitation of the machine with voltage pulses and to measure the current step response; cf. for instance Schroedl, "Sensorless Control of Ac Machines at Low Speed and Standstill Based on the INFORM Method", Proceedings of 31st IAS Annual Meeting San Diego, Vol. 1 (1996), pp. 270-277; or Holtz et al., "Elimination of Saturation Effects in Sensorless Position Controlled Induction Motors", Proceedings of IEEE Industry Applications Annual Meeting, Vol. 3 (2002): pp. 1695-1702. The voltage pulses are realized by changing the switching state of the inverter associated with the machine. As the voltage step response is influenced by the transient inductance, the stator resistance, the back emf (electromagnetic force), and the dc link voltage, a set of at least two different active inverter switching states has to be applied to extract the value of the transient inductance. This pulse sequence has to be applied each time a measurement of the saliency position has to be taken. Bartolo et al., "Flux position estimation using current derivatives for the sensorless control of AC machines", IEEE (2008): 1468-1473 describes a method for tracking inherent saliences of ac machines. To establish the fundamental wave excitation of the machine, a usual PWM (pulse width modulation) of the machine is continuously applying voltage pulses to the machine. In some operating states the corresponding current responses can directly be used for the saliency measurement, compare e.g. Wolbank et al., "A modified PWM scheme in order to obtain spatial information of ac machines without mechanical sensor", Proc. IEEE Applied Power Electronics Conference, APEC (2002): pp. 310-315. An integration of fundamental wave excitation and pulse voltage injection (test signals) is thus theoretically possible. The practical limits of this integration can be found in the measurement setup. To identify the current derivative using standard industrial current sensors, a set of two measurements is necessary, taking the current difference at two time instants. More in detail, the current derivative di/dt is approximated by taking the difference Δi of two current values during a specific time interval ΔT. The value of the minimum pulse duration is determined by the time necessary for the switching transients to settle plus the time that is determined by the sensor signal resolution. The current difference Δi between the two current values must be high enough to allow also an accurate measurement of the modulation of the current difference caused by the saliencies. This modulation is in the range of a few percent of the fundamental wave when considering induction machines. In practical measurements, the minimum time of a single pulse is in the range of 30µs to 60µs. The duration of the set of the two different active switching states necessary is thus in the order of at least 60µs to 120µs. On the other hand, a usual PWM period amounts about 100µs.

Accordingly, to reduce this minimum necessary duration, in Wolbank et al., "Prediction and measurements of a current derivative sensor response for voltage pulses applied to induction machines", Journal of Applied Physics, Vol. 93 (10) (2003): pp. 6656-6658, the application of current derivative sensors has been proposed. As only one sample is then necessary, the only limitation is imposed by the settling time of the sensor signals after the switching transients. The minimum time duration of a single pulse is then in the range of 10µs or some few 10µs. As long as the active pulse durations of the fundamental wave PWM are above this minimum value, an integration of the test signal is possible.

From James Borg Bartolo et al., "Flux Position Estimation using Current Derivatives for the Sensorless Control of AC Machines", Communications, Control and Signal Processing, 2008 ISCCSP 2008.3rd International Symposium on IEEE, PISCATAWAY, NJ USA, 12 March 2008, pages 1468-1473, it is known in connection with saliency tracking in AC machines to use pulse type injection for the extraction of a rotor or flux position signal. The saliency is tracked by measuring the current derivative resulting from voltage test application. However, more in detail, it is provided here that the measurement of the sensor signals is carried out only after a rather long delay time, for instance 10.5 psec or 20 psec; this delay has been introduced to allow for the current derivative signal to settle to a constant value. Namely, it is stated that the main criterion of performance assessment is the settling time required for a stable derivative value to be sampled.

Then, from the WO 03/087855 A1 and from Rüdiger Kusch et al., "Encoderless Positon Estimation of a Squirrel Cage Synchronous Reluctance Machine", IECON-2003 Proceedings of the 29th Annual Conference of the IEEE Industrial Electronics Society ROANOKE, VA, November 2-6, 2003, Vol. 2, page 1038-1042, it is known that when measuring currents or estimating the position of the respective machine, the low signal noise ratio is problematic. Therefore, to improve the s/n ratio, it is disclosed to sample the measurement signals, with a sampling frequency of for instance 200 kH, that is a frequency higher than the PWM switching frequency. The observation time window generally is equal the PWM period.
Finally, in Markus A. Vogelsberger et al., "Using PWM-Induced Transient Excitation and Advanced Signal Processing for Zero-Speed Sensorless Control of AC Machines" of the IEEE Transaction on Industrial Electronics, January 2010, Vol. 57 (1), page 365-374 again signal-injection methods are disclosed where current derivatives are measured, and where it is pointed to that in the case that current derivatives are measured during a zero voltage vector, the signal magnitude is very low which leads to an increased sensitivity to noise. In the following, specific algorithms are referred to, as in particular the so called RANSAC algorithm, to solve the location-determination problem.

Besides this, an important aspect in view of the application of the present invention should be mentioned, namely the sensorless speed control of ac machines. Such sensorless control has been developed in the past decades from an academic research topic to wide industrial application. The industrially applied techniques rely on integration of the machines back-emf to determine the flux position, to deliver excellent performance in the medium and high speed/frequency range. With decreasing fundamental frequency, the influence of parameter variations increases, this leading to reduced accuracy. Finally, when operated at zero frequency, no stable operation is possible due to the lack of feedback for the integration, as is for instance described in Holtz et al., "Sensorless Control of Induction Motor Drives", Proceedings of IEEE, Vol. 90 (8) (2002). In this operating range, methods have to be applied that are able to track the inherent saliencies of the machine.

These saliencies are not visible in the frequency range of the fundamental wave, they can, however, be measured when considering the high frequency or transient electrical properties of the machine, as mentioned above. As explained, methods to extract saliency information so far are either based on the hf (high frequency) properties using an additional excitation of the machine ("signal injection") by rotating or pulsating carrier signals, or on the transient current change due to voltage pulses imposed by switching patterns.

As the injected signal also has side effects in terms of acoustic noise emission, maximum inverter output voltage, and inverter switching frequency, efforts have been made to integrate especially the transient excitation sequences into the fundamental wave PWM, compare e.g. the article of Wolbank et al. referred to above.

Though the switching sequence of the PWM can theoretically be used to extract the saliency information, one practical limit exists for all these methods: It is the minimum duration necessary for the current sensors to settle their output values after the so-called "signal ringing" due to parasitic effects caused by the steep voltage change. Before these switching transients weaken a sampling of the currents or their derivatives is not practical. Thus the switching sequence of the standard PWM has to be modified at least during each sector transition when the duration of one of the active switching states gets too short for a proper measurement.

Accordingly, it is an object of this invention to provide a method and a system as mentioned above where substantially shorter time measurement intervals are rendered possible to yet obtain a reliable evaluation of the transient current changes, in particular time durations clearly below lOps, that is e.g. one order shorter when compared with the prior art.

Accordingly, the above problem is solved by a method and by a system as defined in the independent claims.

Preferred embodiments of the invention are defined in the dependent claims.

In short, the present invention provides to extract the saliency information using the switching transients and applying oversampling, and therewith avoids the above mentioned measurement problem of the prior art by directly evaluating the sensor signals with the switching transients superposed. In most applications, the measurement procedure can be finished even before currently applied methods can start the sampling of the sensors.

According to a preferred technique, oversampling rates in the order of at least about 5 times, for instance about 10 times, the frequency of the transient current changes (which can be determined a priori for each respective machine in a test); in particular, the oversampling rate may be in the order of at least about 10MHz (in principle, according to the Nyquist-Shan-non theorem, the sampling frequency *f*sampling is higher than twice the maximum frequency *f*ₘₐₓ of the sampled signal, and for oversampling, at least an additional factor 2 is chosen, that is *f*oversampling > 4*f*ₘₐₓ.

Furthermore, to reduce the evaluation actions, it is preferred to restrict a priori the evaluation of the sampled transient current changes to a limited time window, for instance to a duration of about 2ps to about 14ps, in particular 3ps to lOps. Preferably, the observation time window is triggered by control pulses which are timely related to the voltage pulses applied to the stator windings.

Although it is possible to use the transient current changes themselves to track the saliencies of the respective machine in accordance with this invention, it is yet preferred to carry out the tracking on the basis of the current derivatives di/dt, and to this end, a current derivative sensor, as known per se, may be used.

Preferably, the sampled sensor signal values are evaluated in mean value calculation modules. Here, in particular, simply a mean value of the signal values and/or a mean slope value of the signal values may be calculated.

Further, it is preferred that the observation time window is triggered by control pulses which are timely related to the voltage pulses applied to the stator windings.

According to a particularly preferred embodiment, the evaluation means comprise a delta signal converter and filter module.

Then, to carry out the oversampling according to the invention, simply an according A/D (analog/digital) converter having a corresponding cycle time may be used. In a particularly preferred embodiment, a delta signal converter and filter module may be used.

The invention will be described now in more detail on the basis of preferred embodiments to which, however, the invention is not limited, and with reference to the drawings. In these drawings:
Fig. 1 illustrates a block diagram of an exemplary system according to the invention in connection with a 3-phase ac induction machine;
Fig. 2 shows a diagram of a sensor signal comprising transients measured by a so-called Rogowsky type sensor, a current derivative sensor, with said transients excited by the switching of an inverter associated with a machine as shown in Fig. 1, and where the sampling of this sensor signal is schematically illustrated;
Fig. 3 is a block scheme illustrating the excitation, measurement and data processing in accordance with the invention;
Fig. 4 is a schematic diagram showing variance vs. observation time window length, and illustrating the influence of the window length on statstical signal properties, namely also for different oversampling rates;
Fig. 5, in lines A, B and C, shows diagrams of the real part and imaginary part of detection results (vs. rotor angle) obtained with standard industrial current sensors (line A), and in accordance with the invention, with mean value calculation (line B) and with mean slope calculation (line C);
Fig. 6 shows the outputs of a di/dt sensor (line a) and of a corresponding delta sigma modulator (line b) during switching transients, at a modulator frequency of 10MHz; and
Fig. 7 illustrates measurement results, and in particular the accuracy of saliency signals obtained for zero rotor (slotting) speed exploiting di/dt signals during switching transients (observation window 4.8ps (dashed line) / 9.6ps (solid line)) and applying delta sigma modulation at 10MHz.

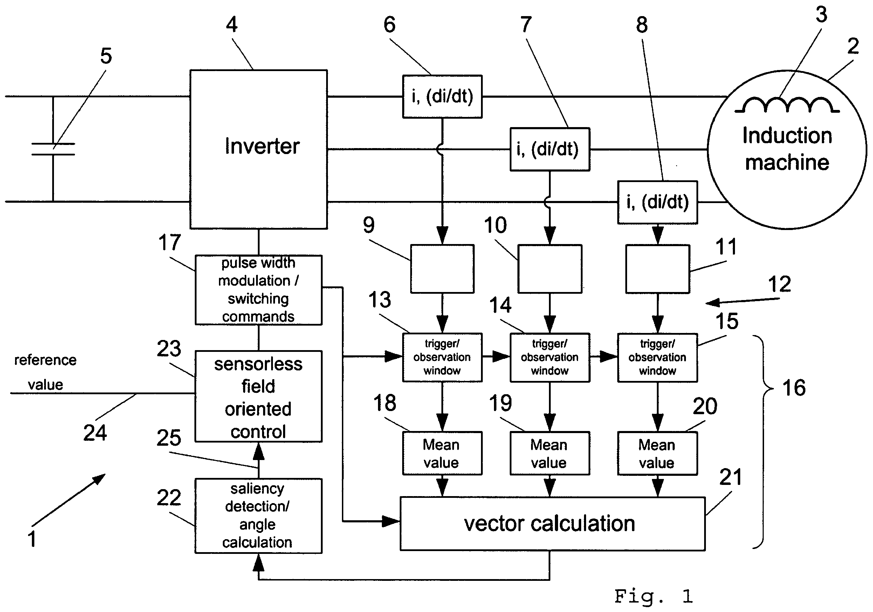

First, an embodiment of the present system 1 will be described in particular with reference to Fig. 1.

The shown system 1 is associated with a usual induction machine 2 (ac machine) which includes a stator having windings (one being shown schematically at 3) and a rotor (not shown).

The machine 2 is e.g. a 3 phase ac machine, and an inverter 4 with a dc link capacitor 5 is connected to the three phase terminals of the machine 2. Each phase current is measured by a current derivative sensor 6, 7 and 8. Instead thereof, it would for instance also be possible to arrange one single sensor in the link circuit, between the link capacitor 5 and the inverter 4.

The sensor signals are converted by respective analog to digital (A/D) converters 9, 10 and 11 with a high sampling rate to ensure oversampling of the switching transition. Accordingly, in this case, oversampling means 12 are formed by A/D converters 9, 10, 11. The sampled signals are then transferred to respective trigger/observation window elements 13, 14 and 15 which belong to evaluation means 16. There, the trigger instant is determined by combining switching commands obtained from a pulse width modulation unit 17 and the sampled sensor values. Only the sampled values lying within the respective observation windows, starting from the trigger instant, are transferred to respective mean value calculation means (blocks) 18, 19 and 20 which belong to the evaluation means 16, too.

The three mean values of the three phase sensors 6, 7, 8 during the observation window are combined in a vector calculation block 21 (which again is a part of the evaluation means 16) to a space vector thus removing any offset value or zero sequence component.

Combining the signals obtained from two different active switching transitions together with the knowledge of the inverter output voltage phasors involved it is possible to eliminate the influence of the back electromotive force (emf) (the voltage induced by the movement of the flux), as is known per se. The information on the corresponding switching states and voltage phasors involved are obtained from the pulse width modulation unit 17.

The output of the vector calculation block 21, after elimination of the back emf, only contains the wished information on the machine asymmetries. This signal is transferred to a saliency detection block 22 where, for instance in the case of the slotting saliency, the incremental rotor position information is calculated and superposed other saliencies, if any, may be removed, as is known per se.

In a sensorless field oriented control block 23, the necessary inverter output voltage to follow the external reference value inputted at 24 is determined based on the external reference value (input 24) and the calculated rotor position (input 25). It may be mentioned here that in the present drawing, a usual basis current control of the control block 23 has been left out to render the drawing not too complicated.

When the switching state of the inverter 4 is changed a steep voltage change is initiated at the inverter output terminals leading to a transient excitation of the whole system consisting of inverter, cabling, and machine windings. Due to the parasitic capacitances and inductances of all system components the switching transition initiates a high frequency oscillation that is detectable in all sensor signals.

Practical measurements on a machine under test showed a winding-to-ground capacity in the range of 1nF and a phase-to-phase capacity value in the range of 500pF.

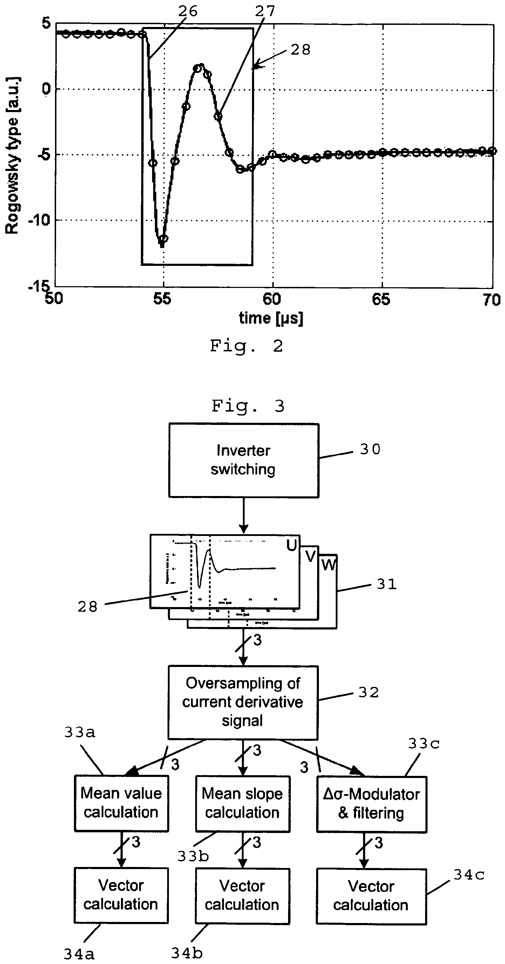

An example for switching transients of a current derivative sensor 6, 7 or 8 is depicted in Fig. 2. The current derivative sensors 6, 7, 8 applied in this embodiment are of Rogowsky type. When designing these sensors, the primary design parameters number of turns n, coils area A, and coil material (µr) influence both self- and mutual-inductance as well as the sensor bandwidth. It is thus possible to adapt such a sensor to the specific application of inverter fed operation. The bandwidth of the sensors 6, 7, 8 can thus be intentionally set below the dominant frequency of the switching transients to directly act as a noise filter.

As can be seen in Fig. 2, the shown switching transient - curve 26 - still adds a considerable noise level to the sensor signal making it usable for conventional measurement techniques only after the settling of these transients.

This settling time equals the minimum pulse duration necessary for each of at least two different switching states to perform the correct measurements and to extract the saliency information. Especially at low modulation indexes, it is obvious that a modification of the standard PWM is necessary to ensure this minimum pulse duration. If it is possible to avoid this blanking time during the switching transients, standard PWM can be used without modification in almost the whole operating range.

When comparing the switching transients of the different phases for different switching states, it turns out that the distortion introduced by the inverter 4 is almost identical for each phase what means symmetrical with respect to the complex space phasor plane. As will be shown it is possible to separate the distortion components from the share the saliencies have on the resulting signal using the proposed signal processing.

In a practical measurement set-up, the induction machine 2 was a 5.5kW machine with two poles, 36 stator slots and a rotor with 28 unskewed bars.

To extract the saliency information of the machine 2 it is necessary to identify the changes in the current derivative imposed by the asymmetry what corresponds to the modulation of the sensor output signal after settling of the transients.

As may be gathered from Fig. 2, a direct sampling of the correct di/dt value (corresponding to the voltage applied after the switching) is not possible within the first lOps after the actual switching transition.

However, when establishing oversampling (and applying corresponding signal processing algorithms), it is possible to extract signal indicators that correspond to the steady state value of the respective sensor 6, 7, 8 after the settling of the switching transition and thus contain the modulations of the sensor output due to the saliencies. This oversampling is schematically indicated in Fig. 2 with small circles 27.

The measurement setup and resulting signal indicator values considered in the following are:
- (standard A/D conversion) successive approximation/pipeline, mean value during a specified time window; cf. the observation time window 28 schematically shown in Fig. 2;
- (standard A/D conversion) successive approximation/pipeline, mean signal slope
- (delta/sigma conversion) modulator - sincK - fir filter All evaluation methods considered have in common that a high number of samples is processed. In order to accurately extract the saliency induced modulation, it is important to guarantee an accurate selection of the sampled values for the further signal processing. The time instant of the actual switching transition is not identical with the instant of the switching command. The exact trigger for the sampling is advantageously derived on the basis of the sensor output signal in combination with the switching command.

The whole saliency detection scheme can be seen from Fig. 3, starting with the machine excitation by changing the inverter switching state, block 30. Then the sensor signals - cf. transient curves at 31 - are sampled using for instance high speed A/D converters 9, 10, 11 (Fig. 1) to establish oversampling - block 32 in Fig. 3. The time duration selected for the further signal processing is limited to the switching transients as indicated by the two dashed vertical lines (window 28) in the time traces of the sensor output signals (curves 31). This oversampling is followed by different signal processing algorithms, cf. blocks 33a, 33b, and 33c in Fig. 3, to calculate different characteristic signal parameters (e.g. mean value, mean slope and ΔΣ modulation and filtering) that all contain the modulation of the saliencies. In a final step, the calculated phase indicators are combined to a vector, according to blocks 34a, 34b, 34c.

The signal processing may be done offline based on the values stored in a buffer. However, it is also possible that the whole sampling and preprocessing will be done e.g. in an FPGA (field programmable gate array). The sampling is realized at 10MHz.

Using standard analog to digital (A/D) converters as converters 9, 10, 11, that is as oversampling means 12 (Fig. 1), with 100ns conversion time and a resolution of 12 bit, the signal processing may be as follows.

The measurement and sampling procedure offers the possibility to calculate not only the mean value during an observation window 28, but also to determine the slope of the sensor signal 26 what corresponds to the second time derivative of the phase current. As shown in Fig. 2, the switching transition is clearly visible in the sensor signals for at least 6µs. The window 28 length used for the further processing may thus varied between 2µs and 14µs to show its influence on the resulting saliency detection.

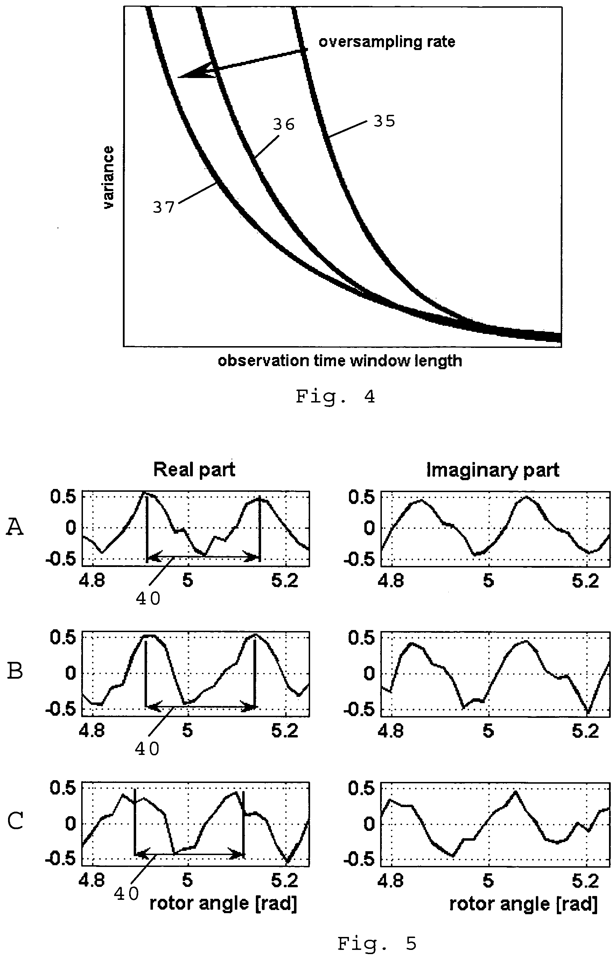

The influence of an observation window 28 variation on the variance of the signal obtained after the mean value calculation is shown in principle in Fig. 4, for several oversampling rate values (curves 35, 36, 37), taken at the same position of the saliencies. In Fig. 4 the oversampling rate increases from right to left, i.e. from curve 35 to curve 37. The expected value changes with the window length due to the signal transients; it has turned out that even if the whole window lies within the switching transient (∼8µs), the variance is already quite low so that sufficiently exact detection results are obtained, and the results are the better the higher the oversampling rate.

To show the influence of inherent saliencies on the signals obtained it is advantageous in a first step to assume an exactly identified single saliency present in the machine 2. For this purpose, the slotting saliency of an unskewed machine may be chosen. To avoid interaction with the saturation saliency, the machine 2 can be operated without main flux at first. During one mechanical rotor revolution the construction-induced modulation of the transient leakage induction due to rotor slotting recurs N-times, where N is the number of rotor slots (e.g. 28 for the machine-under-test).

Combining the results of the three phases (U, V, W - cf. Fig. 3, at 31) to one resulting phasor (as indicated also in Fig. 3 at blocks 34) leads to an asymmetry information phasor in the complex plane. The magnitude of the phasor corresponds to the significance of the asymmetry, and the direction of the phasor indicates the spatial position of the asymmetry. This asymmetry information is shown in Fig. 5. The figure shows the real and imaginary components of this phasor during two rotor slotting periods resulting in the phasor performing two periods during the measurement interval. The upper two diagrams, in line A, were obtained using standard industrial current sensors in combination with two samples and calculation of Δi/ΔT in a separated voltage pulse sequence according to the prior art (and with a pulse length of 50µs).

The diagrams in line B of Fig. 5 are obtained when using the method according to the invention in combination with current derivative (di/dt) sensors and an observation window of the first 4ps within the switching transients. The slotting period is indicated by vertical lines and a horizontal double arrow 40.

When comparing the results using the conventional (line A) as well as the present method (line B), it can be seen that the influence of the slotting saliency can be clearly extracted within the switching transients using the proposed oversampling method. The performance of the resulting signal when using the proposed method is not deteriorated even when using only a 4ps window length.

Based on the sampled values of the di/dt sensors 6, 7, 8 (Fig. 1) using standard analog to digital converters 9, 10, 11, the time derivative of the sensor signals (difference between a set of subsequent sampled di/dt-values) can be determined using a short and fast algorithm. The average values of the differences can be calculated using a moving window within the set of sampled values. Then the time trace of the average (mean) value is obtained what delivers an estimate of the sensor output slope superposed with the switching transients. Applying this algorithm leads to the results shown in Fig. 5, line C ("mean slope").

Of course there is also a clear influence of the window length on the results obtained. For the case of line C, the optimum window length was determined empirically to amount 3.5µs.

Comparing the results of Fig. 5, lines B and C, it can be seen that both the mean value as well as the extracted slope of the di/dt sensor signal clearly describe the asymmetry caused by the slotting.

A very attractive alternative to fast sampling standard analog to digital converters is the usage of delta sigma converters, cf. also block 33c in Fig. 3, as oversampling means 12 (Fig. 1). Especially in high power inverter applications, the single-bit data transmission offers high robustness against EMI (electromagnetic interference). In addition, due to the high rate of oversampling and the fact that the switching transients always have a predefined phase angle, a very effective filtering of the distortions can be realized.

As the combination of modulator and filter offers some degree of freedom, an example for a basic structure of this conversion is summarized in the following. For more details on delta-sigma modulation techniques see for example Schreier et al., "Understanding Delta-Sigma Data Converters", Wiley-IEEE Press, ISBN 0-471-46585-2 (2005).

Delta sigma conversion is well established in audio consumer applications. The converter comprises a modulator and a filter. The modulator converts the analog signal into a digital data stream. In the second stage, a filter is used to increase the resolution and to reduce quantization noise what is also called noise shaping. The modulator consists of a set of integrators, a comparator and a single-bit digital-to-analog converter. The input signal of the modulator is passed through the integrators. Using the comparator, this signal is converted to a bit stream. This bit stream is passed through the digital-to-analog converter and fed back again to the integrator inputs where it is subtracted.

Usually, a set of two integrators is applied leading to a second order modulator. Using a higher order increases stability problems of the modulator.

The second stage of the delta-sigma conversion is a low pass filter. This filter removes the quantization noise, and by reducing the data rate (also called "decimation"), it increases the resolution. Usually a combination of sincK and finite impulse response (FIR) filters is applied. The sincK filter establishes the first step of the decimation and has thus to operate at sampling frequency. The advantage of the sincK filter is that no digital multipliers are necessary what makes it ideal for hardware realization using e.g. a field programmable gate array (FPGA) .

Due to the oversampling, the quantization noise is shifted to high frequencies where it can be removed very effectively by the filtering. The delta sigma modulator with the feed back has a more effective high pass behavior with respect to the quantization noise and low pass properties for the input signal than other oversampling methods.

With such delta sigma converters, it is thus possible to adapt the conversion process to the specific signal properties. The decimation filter allows an increased resolution by realizing a moving average over a specific number of samples. In the specific application considered herein, this moving average can effectively be applied to filter also specific signal noise components introduced by the switching transition.

For practical measurements, a second order modulator was chosen together with a sinc3 filter (k=3). The parameter modified during the tests was the decimation factor.

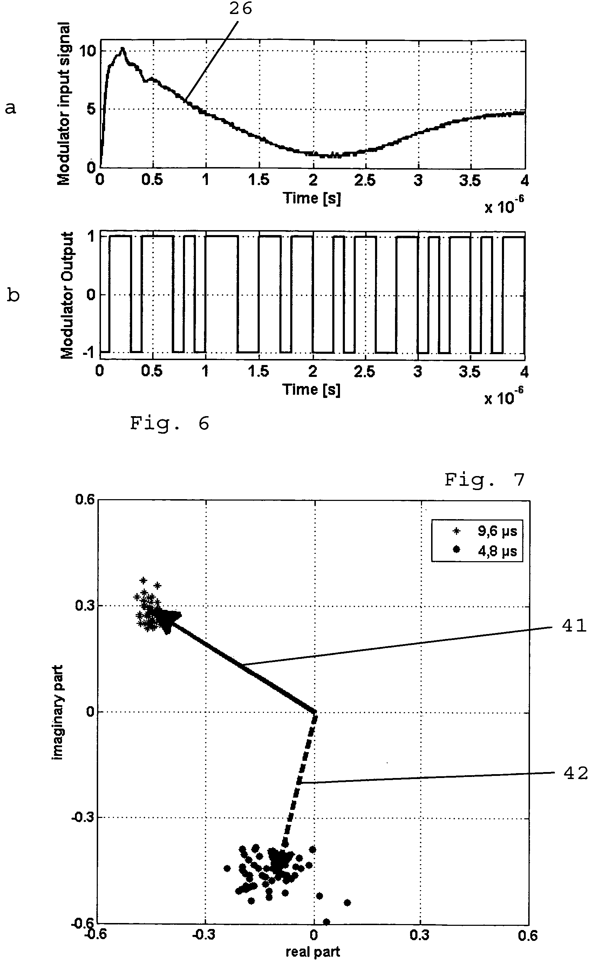

In Fig. 6 the sensor and modulator signals of a delta-sigma modulation are shown during a switching transition. The upper diagram depicts the time trace 26 of a di/dt sensor 6, 7 or 8 during the first 4µs after the switching transition. This signal equals the input signal to the modulator.

When choosing the length of the observation window equal to the duration of the switching transition an oversampling rate of ∼32 is possible for a modulation frequency of 10MHz. If only the mean value during this observation window is exploited it means that only the dc value is exploited leading to very high SNR (signal-noise-ratio) of theoretically 85dB. After applying the filtering and downsampling according to the sinc3 filter a value corresponding to the steady state di/dt is obtained with high precision and low distortions. The accuracy of the resulting signal is shown in Fig. 7 for two different rotor positions and observation windows (solid/dashed phasor indicated by arrows 41, 42). Using 10MHz sampling rate and a decimation of 16/32 the corresponding observation window is 9.6µs (phasor 41) / 4.8ps (phasor 42).

After applying the filtering and down-sampling according to the sinc3 a signal with low distortions is obtained, correlated to the steady state di/dt. Measurement results for mechanical standstill are depicted in Fig. 7. The resulting saliency signal (slotting saliency position) is represented by the black (solid) phasor 41. The dots around the tip of this phasor 41 represent subsequent measurements for the same saliency (rotor) position. A second set of measurements is done at a different rotor position and using a 4.8µs observation window (dashed phasor 42).

A modulator running at 10MHz and a sinc3-filter with a decimation of 16 (corresponding observation window length equals 4.8ps) were used for the saliency detection. As can be seen from Fig. 7, the accuracy is high enough to allow a clear identification of the slotting saliency and with a quality comparable to measurements taken in combination with standard current transducers and 50µs (!) pulse duration.

The present method is based on an elimination of the switching transients from the sampled signals by using oversampling techniques. This elimination of course cannot be perfect, leading to a remaining influence of the fundamental wave. This influence can be identified, fed forward and then further reduced by applying standard compensation means.

Considering the performance of the commercially available A/D converters in the low to medium price range, it has to be said that currently the successive approximating A/D converters achieve a sampling rate of around 10MHz (100ns conversion time). Other A/D converter topologies like pipelined ADCs achieve much higher sampling rates and are therefore a possible alternative to successive approximation A/D converters.

On the other hand, when using delta sigma converters, it is necessary to adapt the filter/decimation to this specific measurement (current derivative sensor signals), as the application to extract saliency information is different from most other signal processing methods. It is thus necessary to use separate modulators and filters. The modulators currently commercially available are of second order and have a maximum sampling rate of 20MHz. Under these constraints it is currently advantageous to prefer the successive approximation or pipelined to the delta sigma conversion. When using oversampling techniques to filter the switching transients, one important factor is the accurate triggering of the sensor signal. In the present case, the trigger was practically realized by a combination of the switching command and the sensor output signal. In order to extract the saliency information from the sensor signals it has to be guaranteed that the position of the observation window is not changed with respect to the switching transition.

Extraction of ac machines inherent saliencies offers the possibility to estimate the flux/rotor position without mechanical sensor. The present technique to extract this saliency information offers the possibility to sample the necessary signals even during periods where the switching transients prevent conventional methods from delivering useful information for sensorless control.

According to the above embodiments, the oversampling techniques are applied to current derivative sensors. However, it should be appreciated that it is also possible to use standard current sensors instead, in which case a time derivative is calculated using state of the art algorithms in the evaluation means 16. It enables an effective means of eliminating the distortion caused by the switching transients introduced by the inverter.

Two main oversampling techniques have been described above with respect to saliency extraction of ac machines: standard A/D conversion as well as delta-sigma conversion. Both methods were tested on the slotting saliency of an unskewed induction machine. It was shown that in any case, the oversampling method is able to extract the saliency information with the comparable signal to noise ratio as conventional methods that, however, need minimum duration of the voltage pulses after the settling of the transients. The present method is thus able to extract saliency information without injecting additional switching patterns or modifications to the PWM.

The present invention may be applied in the case of sensorless speed control of ac machines, but also in other cases where a detection of the rotor position is wished.

Moreover, the invention may be applied to the detection of (beginning) defects in ac machines, as for instance when a rotor bar is beginning to break; or in cases of insulation faults (short-circuiting of turns of a winding); or bearing defects.

## Claims

1. A method for tracking inherent saliencies of ac machines (2) comprising a stator with windings (3) and a rotor, wherein transient current time derivative changes (26) or transient current changes due to voltage pulses applied to the stator windings are sensed, and the sensed signals are evaluated to track the saliencies, **characterized in that** the sensed signals, with superimposed switching transients, are evaluated by applying oversampling to the sensed signals with an oversampling rate which is related to the frequency of the transient current time derivative changes or the transient current changes, and by evaluating signal indicators that correspond to the steady state value of the current time derivative, that signal indicators containing modulations due to the saliencies.

2. The method according to claim 1, **characterized in that** the evaluation of the sampled transient current time derivative changes or transient current changes is restricted to a limited observation time window.

3. The method according to claim 2, **characterized in that** the observation time window is triggered on the basis of the sampled values in combination with control pulses which are timely related to the voltage pulses applied to the stator windings (3).

4. The method according to any one of claims 1 to 3, **characterized in that** the transient current changes are sensed by means of a current derivative sensor (6, 7, 8).

5. The method according to any one of claims 1 to 4, **characterized in that** the sampled sensor signal values are evaluated in mean value calculation modules (18, 19, 20).

6. The method according to claim 5, **characterized in that** a mean value (33a) of the signal values is calculated.

7. The method according to claim 5 or 6, **characterized in that** a mean slope value (33b) of the signal values is calculated.

8. The method according to any one of claims 5 to 7, **characterized in that** the sampled sensor signal values are evaluated by means of a delta signal converter and filter module.

9. A system (1) for tracking inherent saliencies of ac machines (2) comprising a stator with windings (3) and a rotor, said system comprising at least one sensor (6, 7, 8) arranged to sense transient current time derivative changes or transient current changes due to voltage pulses applied to the stator windings, and evaluation means (16) arranged to evaluate the sensed signals, to track the saliencies, **characterized by** oversampling means (12) arranged to sample the sensed signals, with superimposed switching transients, with an oversampling rate which is related to the frequency of the transient current time derivative changes or the transient current changes, and by the evaluation means (16) arranged to evaluate signal indicators that correspond to the steady state value of the current time derivative, that signal indicators containing modulations due to the saliencies.

10. The system according to claim 9, **characterized in that** evaluation means (16) are arranged to restrict the evaluation of the sampled transient current changes to a limited observation time window (28).

11. The system according to claim 10, **characterized in that** the observation time window is triggered on the basis of the sampled values in combination with control pulses which are timely related to the voltage pulses applied to the stator windings.

12. The system according to any one of claims 9 to 11, **characterized in that** the at least one sensor (6, 7, 8) is a current derivative sensor.

13. The system according to any one of claims 9 to 12, **characterized in that** the evaluation means (16) comprise mean value calculation modules (18, 19, 20).

14. The system according to any one of claims 9 to 13, **characterized in that** the oversampling means (12) comprise at least one delta signal converter and filter module.

15. The system according to any one of claims 9 to 14, **characterized in that** the oversampling means (12) comprise at least one A/D converter (9, 10, 11).

## Patentansprüche

1. Verfahren zum Verfolgen inhärenter Schenkeligkeiten von Wechselstrommaschinen (2), die einen Stator mit Wicklungen (3) und einen Rotor aufweisen, wobei Zeitableitungsänderungen des transienten Stroms (26) oder Änderungen des transienten Stroms aufgrund von an die Statorwicklungen angelegten Spannungsimpulsen abgefühlt werden und die abgefühlten Signale ausgewertet werden, um die Schenkeligkeiten zu verfolgen, **dadurch gekennzeichnet, dass** die abgefühlten Signale, mit überlagerten Schalttransienten, ausgewertet werden durch Anwenden von Überabtasten für die abgefühlten Signale mit einer Überabtastrate, die auf die Frequenz der Zeitableitungsänderungen des transienten Stroms oder der Änderungen des transienten Stroms bezogen ist, und durch Auswerten von Signalindikatoren, die dem Beharrungswert der Zeitableitung des Stroms entsprechen, wobei die Signalindikatoren Modulationen aufgrund der Schenkeligkeiten aufweisen.

2. Verfahren nach Anspruch 1, **dadurch gekennzeichnet, dass** die Auswertung der abgetasteten Zeitableitungsänderungen des transienten Stroms oder der Änderungen des transienten Stroms auf ein eingeschränktes Beobachtungszeitfenster begrenzt ist.

3. Verfahren nach Anspruch 2, **dadurch gekennzeichnet, dass** das Beobachtungszeitfenster auf der Basis der abgetasteten Werte in Kombination mit Steuerimpulsen angestoßen wird, die zeitlich auf die an die Statorwicklungen (3) angelegten Spannungsimpulse bezogen sind.

4. Verfahren nach einem der Ansprüche 1 bis 3, **dadurch gekennzeichnet, dass** die Änderungen des transienten Stroms mittels eines Stromableitungssensors (6, 7, 8) abgefühlt werden.

5. Verfahren nach einem der Ansprüche 1 bis 4, **dadurch gekennzeichnet, dass** die abgetasteten Sensorsignalwerte in Mittelwertberechnungsmodulen (18, 19, 20) ausgewertet werden.

6. Verfahren nach Anspruch 5, **dadurch gekennzeichnet, dass** ein Mittelwert (33a) der Signalwerte berechnet wird.

7. Verfahren nach Anspruch 5 oder 6, **dadurch gekennzeichnet, dass** ein mittlerer Steigungswert (33b) der Signalwerte berechnet wird.

8. Verfahren nach einem der Ansprüche 5 bis 7, **dadurch gekennzeichnet, dass** die abgetasteten Sensorsignalwerte mittels eines Deltasignalkonverter- und -filtermoduls ausgewertet werden.

9. System (1) zum Verfolgen inhärenter Schenkeligkeiten von Wechselstrommaschinen (2), die einen Stator mit Wicklungen (3) und einen Rotor aufweisen, wobei das System wenigstens einen Sensor (6, 7, 8) aufweist, der dazu ausgelegt ist, Zeitableitungsänderungen des transienten Stroms oder Änderungen des transienten Stroms aufgrund von an die Statorwicklungen angelegten Spannungsimpulsen abzufühlen, und Auswertemittel (16), die dazu ausgelegt sind, die abgefühlten Signale auszuwerten, um die Schenkeligkeiten zu verfolgen, **gekennzeichnet durch** Überabtastmittel (12), die dazu ausgelegt sind, die abgefühlten Signale, mit überlagerten Schalttransienten, mit einer Überabtastrate abzutasten, die auf die Frequenz der Zeitableitungsänderungen des transienten Stroms oder der Änderungen des transienten Stroms bezogen ist, und durch die Auswertemittel (16), die dazu ausgelegt sind, Signalindikatoren auszuwerten, die dem Beharrungswert der Zeitableitung des Stroms entsprechen, wobei die Signalindikatoren Modulationen aufgrund der Schenkeligkeiten aufweisen.

10. System nach Anspruch 9, **dadurch gekennzeichnet, dass** die Auswertemittel (16) dazu ausgelegt sind, die Auswertung der abgetasteten Änderungen des transienten Stroms auf ein begrenztes Beobachtungszeitfenster (28) zu beschränken.

11. System nach Anspruch 10, **dadurch gekennzeichnet, dass** das Beobachtungszeitfenster auf der Basis der abgetasteten Werte in Kombination mit Steuerimpulsen angestoßen wird, die zeitlich auf die an die Statorwicklungen angelegten Spannungsimpulse bezogen sind.

12. System nach einem der Ansprüche 9 bis 11, **dadurch gekennzeichnet, dass** der wenigstens eine Sensor (6, 7, 8) ein Stromableitungssensor ist.

13. System nach einem der Ansprüche 9 bis 12, **dadurch gekennzeichnet, dass** die Auswertemittel (16) Mittelwertberechnungsmodule (18, 19, 20) aufweisen.

14. System nach einem der Ansprüche 9 bis 13, **dadurch gekennzeichnet, dass** die Überabtastmittel (12) wenigstens ein Deltasignalkonverter- und -filtermodul aufweisen.

15. System nach einem der Ansprüche 9 bis 14, **dadurch gekennzeichnet, dass** die Überabtastmittel (12) wenigstens einen A/D-Wandler (9, 10, 11) aufweisen.

## Revendications

1. Procédé de suivi de saillances intrinsèques de machines CA (2) comprenant un stator avec des enroulements (3) et un rotor, dans lequel des changements de dérivée temporelle de courant transitoire (26) ou des changements de courant transitoire dus à des impulsions de tension appliquées aux enroulements de stator sont détectés, et les signaux détectés sont évalués pour suivre les saillances, **caractérisé en ce que** les signaux détectés, avec des transitoires de commutation superposés, sont évalués par application d'un suréchantillonnage aux signaux détectés avec un taux de suréchantillonnage qui est lié à la fréquence des changements de dérivée temporelle de courant transitoire ou les changements de courant transitoire, et par évaluation d'indicateurs de signal qui correspondent à la valeur à l'équilibre de la dérivée temporelle de courant, ces indicateurs de signal contenant des modulations dues aux saillances.

2. Procédé selon la revendication 1, **caractérisé en ce que** l'évaluation des changements de dérivée temporelle de courant transitoire ou changements de courant transitoire échantillonnés est restreint à une fenêtre temporelle d'observation limitée.

3. Procédé selon la revendication 2, **caractérisé en ce que** la fenêtre temporelle d'observation est déclenchée sur la base des valeurs échantillonnées en combinaison avec des impulsions de commande qui sont temporellement liées aux impulsions de tension appliquées aux enroulements de stator (3).

4. Procédé selon l'une quelconque des revendications 1 à 3, **caractérisé en ce que** les changements de courant transitoire sont détectés au moyen d'un capteur de dérivée de courant (6, 7, 8).

5. Procédé selon l'une quelconque des revendications 1 à 4, **caractérisé en ce que** les valeurs de signal de capteur échantillonnées sont évaluées dans des modules de calcul de valeur moyenne (18, 19, 20).

6. Procédé selon la revendication 5, **caractérisé en ce qu'**une valeur moyenne (33a) des valeurs de signal est calculée.

7. Procédé selon la revendication 5 ou 6, **caractérisé en ce qu'**une valeur de pente moyenne (33b) des valeurs de signal est calculée.

8. Procédé selon l'une quelconque des revendications 5 à 7, **caractérisé en ce que** les valeurs de signal de capteur échantillonnées sont évaluées au moyen d'un convertisseur de signal delta et d'un module de filtre.

9. Système (1) de suivi de saillances intrinsèques de machines CA (2) comprenant un stator avec des enroulements (3) et un rotor, ledit système comprenant au moins un capteur (6, 7, 8) agencé pour détecter des changements de dérivée temporelle de courant transitoire ou des changements de courant transitoire dus à des impulsions de tension appliquées aux enroulements de stator, et des moyens d'évaluation (16) agencés pour évaluer les signaux détectés, afin de suivre les saillances, **caractérisé en ce que** des moyens de suréchantillonnage (12) agencés pour échantillonner les signaux détectés, avec des transitoires de commutation superposés, avec un taux de suréchantillonnage qui est lié à la fréquence des changements de dérivée temporelle de courant transitoire ou des changements de courant transitoire, et **en ce que** les moyens d'évaluation (16) sont agencés pour évaluer des indicateurs de signal qui correspondent à la valeur à l'équilibre de la dérivée temporelle de courant, ces indicateurs de signal contenant des modulations dues aux saillances.

10. Système selon la revendication 9, **caractérisé en ce que** les moyens d'évaluation (16) sont agencés pour restreindre l'évaluation des changements de courant transitoire échantillonnés à une fenêtre temporelle d'observation limitée (28).

11. Système selon la revendication 10, **caractérisé en ce que** la fenêtre temporelle d'observation est déclenchée sur la base des valeurs échantillonnées en combinaison avec des impulsions de commande qui sont temporellement liées aux impulsions de tension appliquées aux enroulements de stator.

12. Système selon l'une quelconque des revendications 9 à 11, **caractérisé en ce que** l'au moins un capteur (6, 7, 8) est un capteur de dérivée de courant.

13. Système selon l'une quelconque des revendications 9 à 12, **caractérisé en ce que** les moyens d'évaluation (16) comprennent des modules de calcul de valeur moyenne (18, 19, 20).

14. Système selon l'une quelconque des revendications 9 à 13, **caractérisé en ce que** les moyens de suréchantillonnage (12) comprennent au moins un convertisseur de signal delta et un module de filtre.

15. Système selon l'une quelconque des revendications 9 à 14, **caractérisé en ce que** les moyens de suréchantillonnage (12) comprennent au moins un convertisseur A/N (9, 10, 11).
